# EUROPEAN PATENT SPECIFICATION

(11) **EP 3 252 868 B1**
(45) Date of publication and mention of the grant of the patent: **20.03.2019**
(21) Application number: 16200574.8
(22) Date of filing: 24.11.2016
(51) Int. Cl.: H01Q 1/48, H01Q 1/50, H01Q 9/42, H01Q 5/371

(54) **COMMUNICATION ANTENNA, METHOD AND APPARATUS FOR CONTROLLING THE SAME AND TERMINAL**
KOMMUNIKATIONSANTENNE, VERFAHREN UND VORRICHTUNG ZUR STEUERUNG DAVON UND ENDGERÄT
ANTENNE DE TÉLÉCOMMUNICATION, PROCÉDÉ ET APPAREIL DE COMMANDE DE CELLE-CI ET TERMINAL

(30) Priority: 30.05.2016 CN 201610371760
(43) Date of publication of application: 06.12.2017
(73) Proprietor: Beijing Xiaomi Mobile Software Co., Ltd., Beijing 100085 (CN)
(72) Inventor: XUE, Zonglin, Haidian District, Beijing 100085 (CN); WANG, Linchuan, Haidian District, Beijing 100085 (CN); XIONG, Xiaofeng, Haidian District, Beijing 100085 (CN)
(74) Representative: Robson, Aidan John

(56) References cited:
- CN-A- 103 296 385
- CN-A- 105 305 067
- US-A1- 2014 323 063
- US-A1- 2016 064 801

## Description

### TECHNICAL FIELD

The present disclosure relates to an antenna technology field, and more particularly, to a communication antenna, a method and an apparatus for controlling a communication antenna and a terminal.

### BACKGROUND

With the development of terminal technology, mobile terminals having a variety of sizes and appearances have been achieved currently. On one hand, the mobile terminal with a thinner thickness is expected. Moreover, a metal frame is also increasingly applied to the mobile terminal for good feel and outline. On other hand, demands for communication performance of the mobile terminal become increasingly higher, and a wider communication band is required. However, in the related art, it is difficult to expand the communication band to meet the demands without increasing the thickness of the mobile terminal as longer antennas are required. Further, some frequency bands have poor communication quality.

US 2014323063 A1 discloses an electronic device antenna including an antenna tuning element and conductive housing member and other conductive antenna structures. CN 105305067 A discloses an antenna system including a first metal arm and a second metal arm provided at one side of a metal frame of a terminal, a third metal arm located between the first and second metal arms at the side of the metal frame. US 2016064801 A1 discloses an antenna having an antenna resonating element and an antenna ground. CN 103296385 A discloses an adjustable multi-frequency antenna system.

### SUMMARY

In order to solve the above technical problems, the present disclosure, defined by the appended claims, provides a communication antenna, a method and an apparatus for controlling a communication antenna and a terminal.

According to a first aspect of embodiments of the present disclosure, a communication antenna is provided, which is to be applied in a mobile terminal with a metal frame. The communication antenna includes: a metal frame, a first passive unit, a stimulation receiving unit and a second passive unit;
in which, the first passive unit and the second passive unit are coupled to ground respectively, the stimulation receiving unit is electrically coupled to a radio frequency module so as to receive an electrical signal transmitted by the radio frequency module;
the first passive unit includes a regulating circuit, the regulating circuit includes a switch, a controller and a regulating assembly, the regulating assembly includes a plurality of electronic components, and the controller is configured to control the switch to connect different electronic components of the regulating assembly to the circuit, so as to make the communication antenna resonate in different frequency ranges,
in which the first passive unit further includes a first antenna pattern, a first grounding node is disposed on the first antenna pattern, the first antenna pattern is electrically coupled to a first terminal of the regulating circuit via the first grounding node, a second terminal of the regulating circuit is coupled to ground;
the stimulation receiving unit includes a second antenna pattern and a first matching circuit, a feeding node is disposed on the second antenna pattern, the second antenna pattern is electrically coupled to a first terminal of the first matching circuit via the feeding node, a second terminal of the first matching circuit is coupled to the radio frequency module;
the second passive unit includes a third antenna pattern and a second matching circuit, a second grounding node is disposed on the third antenna pattern, the third antenna pattern is electrically coupled to a first terminal of the second matching circuit via the second grounding node, a second terminal of the second matching circuit is coupled to ground,
in which the feeding node is located between the first grounding node and the second grounding node;
a first break gap and a second break gap are formed at a same side of the metal frame, the first antenna pattern, the second antenna pattern and the third antenna pattern are disposed around the first break gap, and the first antenna pattern and the second antenna pattern are electrically coupled to a part of the metal frame between the first break gap and the second break gap respectively,
in which the second antenna pattern includes a connecting portion, a feeding portion, a first parasitic branch and a second parasitic branch,
in which parts of the metal frame at two sides of the first break gap are electrically coupled by the connecting portion, and the feeding node is disposed on the feeding portion,
the first parasitic branch is extended from the connecting portion in a first direction, the second parasitic branch is extended from the feeding portion in a second direction, the first parasitic branch is electrically coupled to the feeding portion, in which the first direction is a direction from the first break gap to the second break gap, and the second direction is a direction perpendicular to the first direction and pointing to the metal frame.

Alternatively, the regulating assembly includes a capacitor and an inductor.

Alternatively, a capacitance value of the capacitor is in a range of 0.5 pF to 15 pF; and an inductance value of the inductor is in a range of 1 nH to 22 nH.

Alternatively, the regulating assembly includes a conductor having a resistance value of 0 Ω.

According to a second aspect of embodiments of the present disclosure, a method for controlling a communication antenna is provided. The method is based on application of the communication antenna according the first aspect or any possible implementation of the first aspect and includes:
determining a first frequency range where a current communication frequency is located; and
selecting a first electronic component corresponding to the first frequency range from the regulating assembly of the first passive unit of the communication antenna and connecting the first electronic component to the circuit, so that the communication antenna is resonated in the first frequency range.

Alternatively, selecting a first electronic component corresponding to the first frequency range from the regulating assembly of the first passive unit of the communication antenna and connecting the first electronic component to the circuit, includes:
acquiring correspondence information of frequency ranges and electronic components from pre-stored data;
searching for the first electronic component corresponding to the first frequency range in the correspondence information; and
connecting the first electronic component to the circuit via the switch.

According to a third aspect of embodiments of the present disclosure, an apparatus for controlling a communication antenna is provided. The apparatus is based on application of the communication antenna according the first aspect or any possible implementation of the first aspect and includes:
a determining module, configured to determine a first frequency range where a current communication frequency is located; and
a switching module, configured to select a first electronic component corresponding to the first frequency range from the regulating assembly of the first passive unit of the communication antenna and connect the first electronic component to the circuit, so that the communication antenna is resonated in the first frequency range.

Alternatively, the switching module includes:
an acquiring sub module, configured to acquire correspondence information of frequency ranges and electronic components from pre-stored data;
a searching sub module, configured to search for the first electronic component corresponding to the first frequency range in the correspondence information; and
a connecting sub module, configured to connect the first electronic component to the circuit via the switch.

According to a fourth aspect of embodiments of the present disclosure, a terminal is provided, which includes:
a processor; and
a memory configured to store an instruction executable by the processor;
in which the processor is configured to:
   determine a first frequency range where a current communication frequency is located; and
   select a first electronic component corresponding to the first frequency range from the regulating assembly of the first passive unit of the communication antenna and connect the first electronic component with the circuit, so that the communication antenna is resonated in the first frequency range.

The technical solutions provided in embodiments of the present disclosure may have following advantageous effects.

With the communication antenna provided in the above embodiments of the present disclosure, the regulating circuit is disposed in the passive unit, the regulating circuit includes the switch, the controller and the regulating assembly, the regulating assembly includes the plurality of electronic components, and the controller is configured to control the switch to connect different electronic components of the regulating assembly to the circuit, so as to make the communication antenna resonated in different frequency ranges, thereby extending communication frequency bands of the communication antenna, and further meeting communication requirements in different frequency bands.

With the communication antenna provided in the above embodiments of the present disclosure, the parts of the metal frame at two sides of the first break gap are electrically coupled via the connecting portion of the stimulation receiving unit, the first parasitic branch is extended from the connecting portion of the stimulation receiving unit, and the second parasitic branch is extended from the feeding portion of the stimulation receiving unit, so as to regulate some communication frequency bands, thus improving communication quality of these communication frequency bands.

In the method for controlling a communication antenna provided in the above embodiments of the present disclosure, the first frequency range is determined where the current communication frequency is located, and then the first electronic component corresponding to the first frequency range is selected from the regulating assembly of the first passive unit of the communication antenna and connected to the circuit, so that the communication antenna is resonated in the first frequency range. Communication frequency bands of the communication antenna are extended, thereby meeting communication requirements of the current communication.

It is to be understood that both the foregoing general description and the following detailed description are exemplary and explanatory only and are not restrictive of the present disclosure.

### BRIEF DESCRIPTION OF THE DRAWINGS

Accompanying drawings herein are incorporated in and constitute a part of the specification, and illustrate exemplary embodiments in line with the present disclosure, and serve to explain the principle of the present disclosure together with the description.
Fig. 1A is a schematic diagram illustrating a communication antenna useful for understanding an embodiment of the present disclosure;
Fig. 1B is a schematic diagram illustrating a circuit structure of a regulating circuit according to an example embodiment of the present disclosure;
Fig. 1C is a schematic diagram illustrating a circuit structure of a first matching circuit according to an example embodiment of the present disclosure;
Fig. 2 is a schematic diagram illustrating another communication antenna according to an example embodiment of the present disclosure;
Fig. 3 is a flow chart showing a method for controlling a communication antenna according to an example embodiment of the present disclosure;
Fig. 4 is a block diagram illustrating an apparatus for controlling a communication antenna according to an example embodiment of the present disclosure;
Fig. 5 is a block diagram illustrating another apparatus for controlling a communication antenna according to an example embodiment of the present disclosure; and
Fig. 6 is a schematic diagram illustrating a device for controlling a communication antenna according to an example embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It is to be understood that, although terms of "first", "second" and "third" are used for description of various information in the present disclosure, these information are not limited to these terms. These terms are only used for distinguishing information with the same type. For example, without departing from the scope of the present disclosure, the first information may also be referred to as the second information; similarly, the second information may also be referred to as the first information. Depending on the context, such as the words in the use of "if' can be interpreted as "when..." or "when..." or "response to define". Terms such as "longitudinal", "lateral", "upper", "lower", "front", "rear", "right", "left", "horizontal", "vertical", "above", "below", "up", "top", "bottom", "inner", "outer", as well as derivative thereof should be construed to refer to the orientation as then described or as shown in the drawings under discussion. These relative terms are for convenience of description and do not require that the present disclosure be constructed or operated in a particular orientation.

It should be understood that, unless specified or limited otherwise, the terms "mounted," "connected," and "coupled" and variations thereof are used broadly and encompass such as mechanical or electrical mountings, connections and couplings, also can be inner mountings, connections and couplings of two components, and further can be direct and indirect mountings, connections, and couplings, which can be understood by those skilled in the art according to the detail embodiment of the present disclosure.

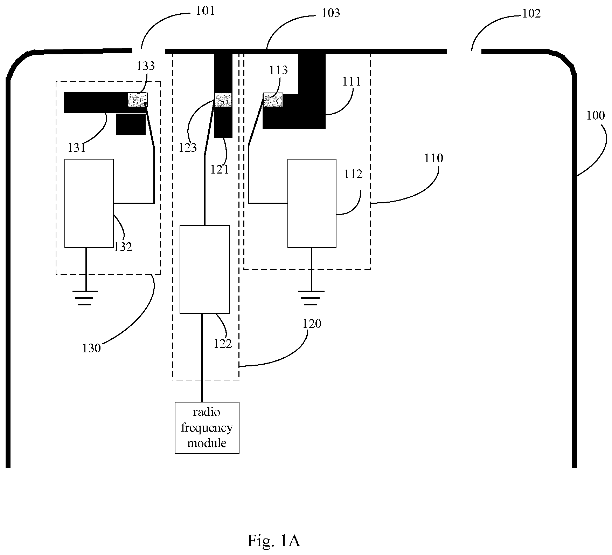

Fig. 1A is a schematic diagram illustrating a communication antenna useful for understanding an embodiment of the present disclosure. The communication antenna is configured to be applied in a mobile terminal with a metal frame. It can be understood by those skilled in the art that, the mobile terminal may include but be not limited to a mobile terminal device such as a smart phone, a smart wearable device, a tablet, a personal digital assistant and the like.

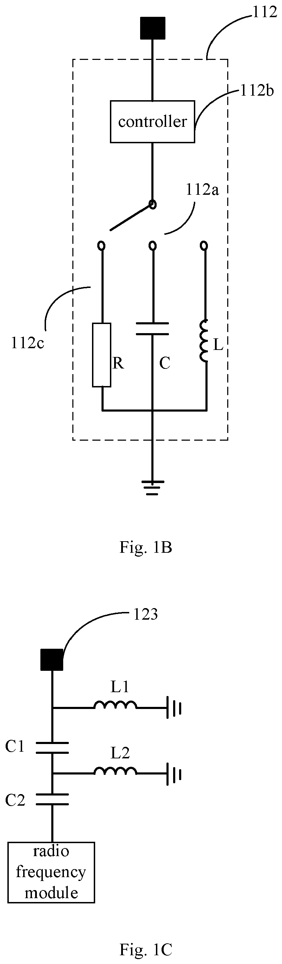

As shown in Fig. 1A, a first break gap 101 and a second break gap 102 are formed at a same side of the metal frame 100 of the mobile terminal. It can be understood that, the first break gap 101 and the second break gap 102 may be formed at any other location of the metal frame 100, which is not limited in embodiments of the present disclosure. For a brief description, the first break gap 101 and the second break gap 102 shown in Fig. 1 are illustrated as an example in all the following embodiments of the present disclosure. The communication antenna includes a first passive unit 110, a stimulation receiving unit 120 and a second passive unit 130.

Specifically, the first passive unit 110 may include a first antenna pattern 111 and a regulating circuit 112. The first antenna pattern 111 is disposed around the first break gap 101. A first terminal of the first antenna pattern 111 is electrically coupled to the part of the metal frame 103 between the first break gap 101 and the second break gap 102, and a second terminal of the first antenna pattern 111 is provided with a first grounding node 113. The first antenna pattern 111 may be electrically coupled to a first terminal of the regulating circuit 112 via the first grounding node 113, and a second terminal of the regulating circuit 112 is coupled to ground.

The regulating circuit 112 may include a switch, a controller and a regulating assembly. The regulating assembly includes a plurality of electronic components, such as a resistor, a capacitor, or an inductor, or the like. The controller is configured to control the switch to connect different electronic components of the regulating assembly with the circuit under different communication requirements, so as to make the communication antenna resonated in different frequency ranges.

For example, Fig. 1B is a schematic diagram illustrating a circuit structure of a regulating circuit according to an example embodiment of the present disclosure. As shown in Fig. 1B, the regulating circuit 112 may include a switch 112a, a controller 112b and a regulating assembly 112c. The regulating assembly 112c includes a resistor R, a capacitor C, or an inductor L. Every time the switch 112a is able to only connect one of the resistor R, the capacitor C and the inductor L with the circuit. Such as a resistance value of the resistor is equal to 0 Ω; a capacitance value of the capacitor is in a range of 0.5 pF to 15 pF; and an inductance value of the inductor is in a range of 1 nH to 22 nH. Under a condition that the resistor R is connected to the circuit, the above communication antenna may meet the communication requirements in a band range of 824 MHz to 894 MHz; under a condition that the capacitor C is connected to the circuit, the above communication antenna may meet the communication requirements in a band range of 880 MHz to 960 MHz; and under a condition that the inductor L is connected to the circuit, the above communication antenna may meet the communication requirements in a band range of 699 MHz to 803 MHz. It should be noted that, the above resistor with the resistance value of 0 Ω may be replaced with a wire or a line, which is not limited in embodiments of the present disclosure. In the embodiment, by switching the electronic components in the regulating assembly 112c, the communication frequency bands of the communication antenna is extended, thereby the communication frequency bands of the communication antenna may cover a band range of 700 MHz to 2700 MHz.

The stimulation receiving unit 120 may include a second antenna pattern 121 and a first matching circuit 122. The second antenna pattern 121 is disposed around the first break gap 101. A first terminal of the second antenna pattern 121 is electrically coupled to the part of the metal frame 103 between the first break gap 101 and the second break gap 102. A feeding node 123 is disposed on the second antenna pattern 121. The second antenna pattern 121 may be electrically coupled to a first terminal of the first matching circuit 122 via the feeding node 123, and a second terminal of the first matching circuit 122 is coupled to the radio frequency module, so as to receive an electrical signal transmitted by the radio frequency module.

The first matching circuit 122 may at least include a first capacitor. The first capacitor may be coupled between the feeding node 123 and the radio frequency module. The first matching circuit 122 may further include a second capacitor, a first inductor and a second inductor. In the embodiment, parameter configuration may be performed on the first capacitor, the second capacitor, the first inductor and the second inductor, so that an impedance of the first matching circuit 122 is about 50 Ω. By performing the parameter configuration on the electronic components in the first matching circuit 122, fine adjustment of the oscillation frequency on full-band of the communication antenna may be realized.

For example, Fig. 1C is a schematic diagram illustrating a circuit structure of a first matching circuit according to an example embodiment of the present disclosure. As shown in Fig. 1C, the first matching circuit includes a first capacitor C1, a second capacitor C2, a first inductor L1 and a second inductor L2. A first terminal of the first capacitor C1 is connected to the feeding node 123, and a second terminal of the first capacitor C1 is connected to a first terminal of the second capacitor C2, and a second terminal of the second capacitor C2 is connected to the radio frequency module. A first terminal of the first inductor L1 is connected to the feeding node 123, and a second terminal of the first inductor L1 is connected to ground. A first terminal of the second inductor L2 is connected to a connecting node of the first capacitor C1 and the second capacitor C2, and a second terminal of the second inductor L2 is connected to ground.

The second passive unit 130 may include a third antenna pattern 131 and a second matching circuit 132. The third antenna pattern 131 is disposed around the first break gap 101. A second grounding node 133 is disposed on the third antenna pattern 131. The third antenna pattern 131 may be electrically coupled to a first terminal of the second matching circuit 132 via the second grounding node 133, and a second terminal of the second matching circuit 132 is coupled to ground.

The second matching circuit 132 may include a resistor. A first terminal of the resistor may be connected to the second grounding node 133, and a second terminal thereof is connected to ground. A resistance value of the resistor may be 0 Ω. It should be noted that, the above resistor with the resistance value of 0 Ω may be replaced with a wire or a line, which is not limited in embodiments of the present disclosure.

The feeding node 123 is located between the first grounding node 113 and the second grounding node 133.

In the communication antenna provided in the above embodiments of the present disclosure, the regulating circuit is disposed in the first passive unit, the regulating circuit includes the switch, the controller and the regulating assembly, the regulating assembly includes the plurality of electronic components, and the controller is configured to control the switch to connect different electronic components of the regulating assembly to the circuit, so as to make the communication antenna resonated in different frequency ranges, thereby extending communication frequency bands of the communication antenna, and further meeting communication requirements in different frequency bands.

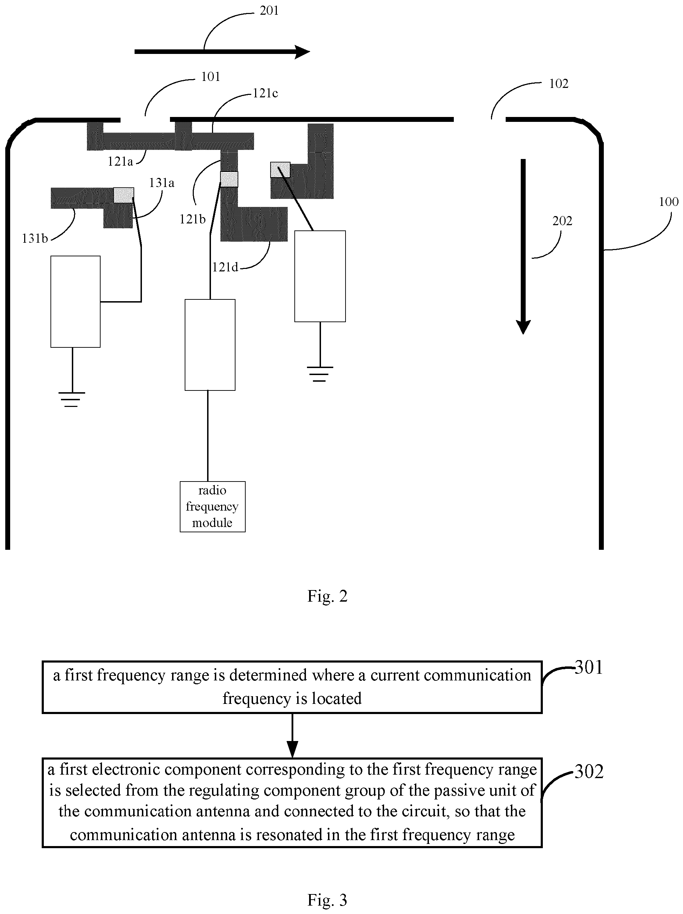

Fig. 2 is a schematic diagram illustrating another communication antenna according to an example embodiment of the present disclosure. The communication antenna is configured to be applied in a mobile terminal with a metal frame. As shown in Fig. 2, a first break gap 101 and a second break gap 102 are formed at a same side of the metal frame 100 of the mobile terminal. It can be understood that, the first break gap 101 and the second break gap 102 may be formed at any other location of the metal frame 100, which is not limited in embodiments of the present disclosure. The communication antenna includes a first passive unit, a stimulation receiving unit and a second passive unit.

Specially, the stimulation receiving unit may include a second antenna pattern and a first matching circuit. The second antenna pattern may include a connecting portion 121a and a feeding portion 121b. Parts of the metal frame at two sides of the first break gap 101 are electrically coupled by the connecting portion 121a. The feeding node is disposed on the feeding portion 121b. A first parasitic branch 121c is extended from the connecting portion 121a in a first direction. A second parasitic branch 121d is extended from the feeding portion 121b in a second direction. The first parasitic branch 121c is electrically coupled to the feeding portion 121b. A direction indicated by an arrow 201 refers to the first direction, which is a direction from the first break gap to the second break gap from. A direction indicated by an arrow 202 refers to the second direction, which is a direction perpendicular to the first direction and pointing to the metal frame.

The second passive unit may include a third antenna pattern and a second matching circuit. The third antenna pattern may include a grounding portion 131a. A second grounding node is disposed on the grounding portion 131a. A third parasitic branch 131b is extended from the grounding portion 131a in a direction opposite to the first direction.

In the embodiment, the first parasitic branch 121c extended from the connecting portion 121a may play a role of regulating communication frequency bands of high frequency, thereby improving communication quality of the frequency bands. The second parasitic branch 121d extended from the feeding portion 121b may play a role of regulating communication frequency bands of a band range of 2300 MHz to 2400 MHz and a band range of 2500 MHz to 2700 MHz, thereby improving communication quality of the above frequency bands. The third parasitic branch 131b extended from the grounding portion 131a may play a role of regulating communication frequency bands of a band range of 1710 MHz to 2170 MHz, thereby improving communication quality of this frequency band.

It should be noted that, the same contents in embodiments of Fig. 1A are not elaborated herein again in embodiments of Fig. 2. Details undisclosed may be referred to the above embodiments of Fig. 1A.

In the communication antenna provided in the above embodiments of the present disclosure, the parts of the metal frame at two sides of the first break gap are electrically coupled via the connecting portion of the stimulation receiving unit, the first parasitic branch is extended from the connecting portion of the stimulation receiving unit, and the second parasitic branch is extended from the feeding portion of the stimulation receiving unit, so as to regulate some communication frequency bands, thus improving communication quality of these communication frequency bands.

It should be noted that, in the embodiment, the coupling volume of each frequency band may be adjusted by distances among the first antenna pattern, the second antenna pattern and the third antenna pattern, trace thickness, trace length, etc., so that the adjustment of the communication quality of different frequency bands may be realized. Meanwhile, it should be noted that the first antenna pattern, the second antenna pattern and the third antenna pattern should be separated apart from metal components, such as USB interface, microphone or motor, so as to reduce effects of these metal components on antenna performance. For example, for the USB interface, shrapnel at two sides of the USB interface may be as the ground node, thereby reducing the effects of the USB interface on the antenna.

Fig. 3 is a flow chart showing a method for controlling a communication antenna according to an example embodiment of the present disclosure. As shown in Fig. 3, the method is applied in a mobile terminal. The method is based on application of the communication antenna according to embodiments of Fig. 1A and Fig. 2. In the embodiment, it can be understood by those skilled in the art that, the mobile terminal may include but be not limited to a mobile terminal device such as a smart phone, a smart wearable device, a tablet, a personal digital assistant and the like. The method includes followings.

In block 301, a first frequency range is determined where a current communication frequency is located.

In block 302, a first electronic component corresponding to the first frequency range is selected from the regulating assembly of the passive unit of the communication antenna and is connected to the circuit, so that the communication antenna is resonated at the first frequency range.

In general, the frequency band of the terminal communication is wide. In addition, with the development of communication technology, the frequency band of the communication will become wider. Therefore the communication antenna needs to work in different frequency bands to meet different communication requirements.

In the embodiment, the regulating assembly of the first passive unit of the communication antenna may include a plurality of electronic components, such as a resistor, a capacitor, an inductor and the like. The controller of the first passive unit of the communication antenna may control the switch to connect different electronic components of the regulating assembly to the circuit. Different electronic components are connected to the circuit, so that the communication antenna may be resonated in different frequency ranges, and each electronic component may be corresponding to a certain frequency range. For example, under a condition that the resistor is connected to the circuit, the communication antenna is resonated in a band range of 824 MHz to 894 MHz; under a condition that the capacitor is connected to the circuit, the communication antenna is resonated in a band range of 880 MHz to 960 MHz; and under a condition that the inductor is connected into the circuit, the communication antenna is resonated in a band range of 699 MHz to 803 MHz. Correspondence information of frequency ranges and electronic components is predetermined, for example, the resistor is corresponding to the band range of 824 MHz to 894 MHz, the capacitor is corresponding to the band range of 880 MHz to 960 MHz and the inductor is corresponding to the band range of 699 HMz to 803 MHz. Then the predetermined correspondence information of frequency ranges and electronic components is stored.

In the embodiment, firstly the first frequency range is determined where the current communication frequency is located. For example, when the phone number needs to be dialled via the terminal, the band is determined where the phone communication is. Then, the correspondence information of frequency ranges and electronic components is acquired from pre-stored data. The electronic component corresponding to the first frequency range is found out from the correspondence information and to be used as the first electronic component. The first electronic component is connected to the circuit via the switch, so that the communication antenna may meet the requirements of the telephone communication.

With the method for controlling a communication antenna provided in the above embodiments of the present disclosure, the first frequency range is determined where the current communication frequency is located, and then the first electronic component corresponding to the first frequency range is selected from the regulating assembly of the first passive unit of the communication antenna and connected to the circuit, so that the communication antenna is resonated in the first frequency range. Communication frequency bands of the communication antenna are extended, thereby meeting communication requirements of the current communication.

It should be noted that, although the method of the present disclosure is performed in an order as shown in drawings, this does not require or imply that the method must be performed according to the specific order or a desired result may be achieved only if all blocks of the method are performed in this order. In contrast, blocks depicted in the flow charts may be performed in a changeable order. Additionally or alternatively, some blocks may be omitted, multiple blocks may be combined as one, and/or one block may be divided into multiple blocks.

Corresponding to the aforementioned embodiments of the method for controlling a communication antenna, embodiments of an apparatus for controlling a communication antenna and a terminal applying the apparatus are also provided by the present disclosure.

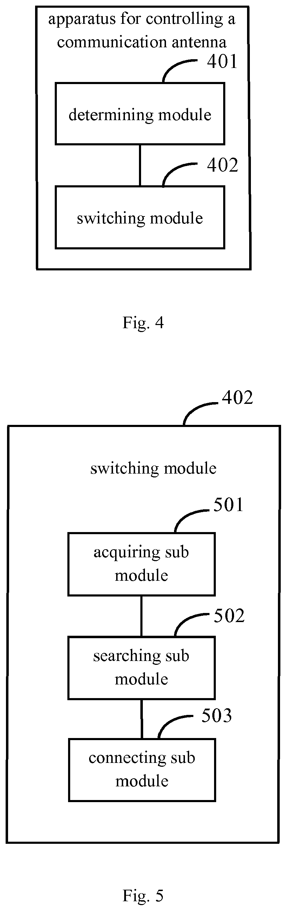

Fig. 4 is a block diagram illustrating an apparatus for controlling a communication antenna according to an example embodiment of the present disclosure. As shown in Fig. 4, the apparatus is based on application of the communication antenna according to embodiments of Fig. 1A and Fig. 2. The apparatus includes a determining module 401 and a switching module 402.

The determining module 401 is configured to determine a first frequency range where a current communication frequency is located.

The switching module 402 is configured to select a first electronic component corresponding to the first frequency range from the regulating assembly of the first passive unit of the communication antenna and connect the first electronic component to the circuit, so that the communication antenna is resonated in the first frequency range.

Fig. 5 is a block diagram illustrating another apparatus for controlling a communication antenna according to an example embodiment of the present disclosure. As shown in Fig. 5, based on the embodiment of the present disclosure shown in Fig. 4, the switching module 402 includes an acquiring sub module 501, a searching sub module 502 and a connecting sub module 503.

The acquiring sub module 501 is configured to acquire correspondence information of frequency ranges and electronic components from pre-stored data.

The searching sub module 502 is configured to search for the first electronic component corresponding to the first frequency range in the correspondence information.

The connecting sub module 503 is configured to connect the first electronic component to the circuit via the switch.

It should be appreciated that the apparatus may be set in advance in the terminal, and may also be downloaded and loaded into the terminal. Corresponding modules in the apparatus may be cooperated with modules in the terminal to achieve a control scheme of the communication antenna.

For the apparatus embodiments, since they are substantially corresponded to the method embodiments, contents of the apparatus embodiments related to the device embodiments may also refer to the method embodiments. The above-described apparatus embodiments are merely illustrative, in which a unit described as a separate component may or may not be physically separated, a component displayed as a unit may or may not be a physical unit, i.e. may be located at one place, or may be distributed on multiple network units. A part or all of the modules may be selected according to practical needs so as to achieve the object of the solution of the present disclosure, which may be understood and implemented by those skilled in the art without creative labor.

Correspondingly, embodiments of the present disclosure also provide a terminal. The terminal includes a processor; and a memory configured to store an instruction executable by the processor. The processor is configured to:
determine a first frequency range where a current communication frequency is located; and
select a first electronic component corresponding to the first frequency range from the regulating assembly of the first passive unit of the communication antenna and connect the first electronic component to the circuit, so that the communication antenna is resonated in the first frequency range.

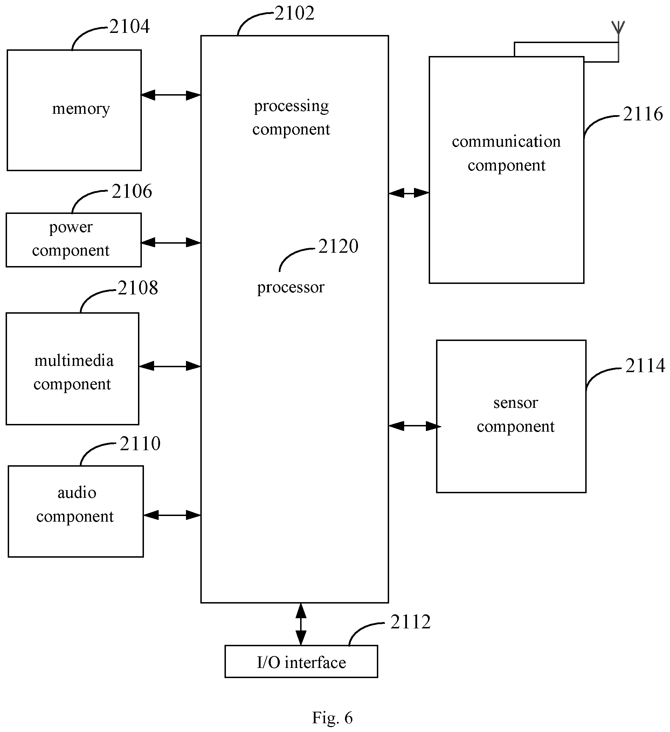

Fig. 6 is a schematic diagram illustrating a device 2100 for controlling a communication antenna according to an example embodiment of the present disclosure. For example, the device 2100 may be a mobile phone, a computer, a digital broadcasting terminal, a messaging device, a game console, a tablet device, a fitness equipment, a medical device, a Personal Digital Assistant PDA, etc.

Referring to Fig. 6, the device 2100 may include the following one or more components: a processing component 2102, a memory 2104, a power component 2106, a multimedia component 2108, an audio component 2110, an Input/Output (I/O) interface 2112, a sensor component 2114, and a communication component 2116.

The processing component 2102 typically controls overall operations of the device 2100, such as the operations associated with display, telephone calls, data communications, camera operations, and recording operations. The processing component 2102 may include one or more processors 2120 to execute instructions to perform all or part of the blocks in the above described methods. Moreover, the processing component 2102 may include one or more modules which facilitate the interaction between the processing component 2102 and other components. For instance, the processing component 2102 may include a multimedia module to facilitate the interaction between the multimedia component 2108 and the processing component 2102.

The memory 2104 is configured to store various types of data to support the operation of the device 2100. Examples of such data include instructions for any applications or methods operated on the device 2100, contact data, phonebook data, messages, pictures, video, etc. The memory 2104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2106 provides power to various components of the device 2100. The power component 2106 may include a power management system, one or more power sources, and any other components associated with the generation, management, and distribution of power in the device 2100.

The multimedia component 2108 includes a screen providing an output interface between the device 2100 and the user. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 2108 includes a front camera and/or a rear camera. The front camera and/or the rear camera may receive external multimedia data while the device 2100 is in an operation mode, such as a photographing mode or a video mode. Each of the front camera and the rear camera may be a fixed optical lens system or have focus and optical zoom capability.

The audio component 2110 is configured to output and/or input audio signals. For example, the audio component 2110 includes a microphone (MIC) configured to receive an external audio signal when the device 2100 is in an operation mode, such as a call mode, a recording mode, and a voice recognition mode. The received audio signal may be further stored in the memory 2104 or transmitted via the communication component 2116. In some embodiments, the audio component 2110 further includes a speaker to output audio signals.

The I/O interface 2112 provides an interface for the processing component 2102 and peripheral interface modules, such as a keyboard, a click wheel, buttons, and the like. The buttons may include, but are not limited to, a home button, a volume button, a starting button, and a locking button.

The sensor component 2114 includes one or more sensors to provide status assessments of various aspects of the device 2100. For instance, the sensor component 2114 may detect an open/closed status of the device 2100 and relative positioning of components (e.g. the display and the keypad of the device 2100). The sensor component 2114 may also detect a change in position of the device 2100 or of a component in the device 2100, a presence or absence of user contact with the device 2100, an orientation or an acceleration/deceleration of the device 2100, and a change in temperature of the device 2100. The sensor component 2114 may include a proximity sensor configured to detect the presence of nearby objects without any physical contact. The sensor component 2114 may also include a light sensor, such as a CMOS or CCD image sensor, for use in imaging applications. In some embodiments, the sensor component 2114 may also include an accelerometer sensor, a gyroscope sensor, a magnetic sensor, a pressure sensor, or a temperature sensor.

The communication component 2116 is configured to facilitate wired or wireless communication between the device 2100 and other devices. The device 2100 can access a wireless network based on a communication standard, such as WIFI, 2G, or 3G, or a combination thereof. In one exemplary embodiment, the communication component 2116 receives a broadcast signal or broadcast associated information from an external broadcast management system via a broadcast channel. In one exemplary embodiment, the communication component 2116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 2100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 2104 including instructions. The above instructions are executable by the processor 2120 in the device 2100, for performing the above-described methods. For example, the non-transitory computer-readable storage medium may be a ROM, a RAM, a CD-ROM, a magnetic tape, a floppy disc, an optical data storage device, and the like.

## Claims

1. A communication antenna for a mobile terminal with a metal frame (100), the antenna comprising the metal frame (100), a first passive unit (110), a stimulation receiving unit (120) and a second passive unit (130),
wherein the first passive unit (110) and the second passive unit are configured to be coupled to ground respectively, the stimulation receiving unit is configured to be electrically coupled to a radio frequency module of the mobile terminal so as to receive an electrical signal transmitted by the radio frequency module;
the first passive unit comprises a regulating circuit (112), the regulating circuit comprises a switch (112a), a controller (112b) and a regulating assembly (112c), the regulating assembly comprises a plurality of electronic components, and the controller is configured to control the switch to connect different electronic components of the regulating assembly to the circuit, so as to make the communication antenna to resonate in different frequency ranges,
wherein the first passive unit further comprises a first antenna pattern (111), a first grounding node (113) is disposed on the first antenna pattern, the first antenna pattern is electrically coupled to a first terminal of the regulating circuit via the first grounding node (113), a second terminal of the regulating circuit is configured to be coupled to ground; the stimulation receiving unit comprises a second antenna pattern (121) and a first matching circuit (122), a feeding node (123) is disposed on the second antenna pattern, the second antenna pattern is electrically coupled to a first terminal of the first matching circuit (122) via the feeding node, a second terminal of the first matching circuit is coupled to the radio frequency module;
the second passive unit comprises a third antenna pattern (131) and a second matching circuit (132), a second grounding node (133) is disposed on the third antenna pattern, the third antenna pattern is electrically coupled to a first terminal of the second matching circuit (132) via the second grounding node (133), a second terminal of the second matching circuit is configured to be coupled to ground, wherein the feeding node (123) is located between the first grounding node (113) and the second grounding node (133);
a first break gap (101) and a second break gap (102) are formed at a same side of the metal frame (100), the first antenna pattern (111), the second antenna pattern (121) and the third antenna pattern (131) are disposed around the first break gap (101), and the first antenna pattern and the second antenna pattern (121) are electrically coupled to a part of the metal frame (100) between the first break gap and the second break gap respectively,
wherein the second antenna pattern (121) comprises a connecting portion (121a), a feeding portion (121b), a first parasitic branch (121c) and a second parasitic branch (121d),
parts of the metal frame at two sides of the first break gap are electrically coupled by the connecting portion, and the feeding node is disposed on the feeding portion,
the first parasitic branch (121c) is extended from the connecting portion in a first direction (201), the second parasitic branch (121d) is extended from the feeding portion in a second direction (202), the first parasitic branch is electrically coupled to the feeding portion, in which the first direction is a direction from the first break gap (101) to the second break gap (102), and the second direction is a direction perpendicular to the first direction and pointing to the metal frame.

2. The communication antenna according to claim 1, wherein the regulating assembly comprises a resistor, a capacitor and an inductor.

3. The communication antenna according to claim 1, wherein the regulating assembly comprises a conductor having a resistance value of 0 Ω, a capacitor and an inductor.

4. The communication antenna according to claim 2 or claim 3, wherein
a capacitance value of the capacitor is in a range of 0.5 pF to 15 pF; and
an inductance value of the inductor is in a range of 1 nH to 22 nH.

5. A method for controlling a communication antenna according to any one of claims 1 to 4, comprising:
determining a first frequency range where a current communication frequency is located; and
selecting a first electronic component corresponding to the first frequency range from the regulating assembly of the first passive unit of the communication antenna and connecting the first electronic component to the circuit, so that the communication antenna is resonated in the first frequency range.

6. The method according to claim 5, wherein selecting a first electronic component corresponding to the first frequency range from the regulating assembly of the first passive unit of the communication antenna and connecting the first electronic component to the circuit comprises:
acquiring correspondence information of frequency ranges and electronic components from pre-stored data;
searching for the first electronic component corresponding to the first frequency range in the correspondence information; and
connecting the first electronic component to the circuit via the switch.

7. An apparatus configured to control a communication antenna according to any one of claims 1 to 4, comprising:
a determining module (401), configured to determine a first frequency range where a current communication frequency is located; and
a switching module (402), configured to select a first electronic component corresponding to the first frequency range from the regulating assembly of the first passive unit of the communication antenna and to connect the first electronic component to the circuit, so that the communication antenna is resonated in the first frequency range.

8. The apparatus according to claim 7, wherein the switching module comprises:
an acquiring sub module (501), configured to acquire correspondence information of frequency ranges and electronic components from pre-stored data;
a searching sub module (502), configured to search for the first electronic component corresponding to the first frequency range in the correspondence information; and
a connecting sub module (503), configured to connect the first electronic component to the circuit via the switch.

9. A terminal, comprising:
a processor;
an antenna according to any of claims 1-4,
an apparatus according to claim 7 or 8, and
a memory configured to store an instruction executable by the processor to cause it to execute the steps of claims 5 or 6.

10. A program product having stored therein instructions that, when executed by one or more processors of an apparatus, causes the apparatus to perform the steps of claim 5 or 6.

## Patentansprüche

1. Kommunikationsantenne für ein mobiles Endgerät mit einem Metallrahmen (100), wobei die Antenne den Metallrahmen (100), eine erste passive Einheit (110), eine Stimulationsempfangseinheit (120) und eine zweite passive Einheit (130) umfasst,
wobei die erste passive Einheit (110) und die zweite passive Einheit jeweils zum Koppeln mit Masse konfiguriert sind, die Stimulationsempfangseinheit zum elektrischen Koppeln mit einem Funkfrequenzmodul des mobilen Endgeräts konfiguriert ist, um ein von dem Funkfrequenzmodul übertragenes elektrisches Signal zu empfangen;
die erste passive Einheit einen Regulierschaltkreis (112) umfasst, der Regulierschaltkreis einen Schalter (112a), eine Steuerung (112b) und eine Regulierbaugruppe (112c) umfasst, die Regulierbaugruppe mehrere elektronische Komponenten umfasst und die Steuerung zum Steuern des Schalters zum Verbinden unterschiedlicher elektrischer Komponenten der Regulierbaugruppe mit dem Schaltkreis konfiguriert ist, um zu bewirken, dass die Kommunikationsantenne in unterschiedlichen Frequenzbereichen resoniert,
wobei die erste passive Einheit ferner eine erste Antennenstruktur (111) umfasst, ein erster Erdungsknoten (113) auf der ersten Antennenstruktur angeordnet ist, die erste Antennenstruktur elektrisch mit einem ersten Anschluss des Regulierschaltkreises über den ersten Erdungsknoten (113) gekoppelt ist, ein zweiter Anschluss des Regulierschaltkreises zum Koppeln mit Masse konfiguriert ist;
die Stimulationsempfangseinheit eine zweite Antennenstruktur (121) und einen ersten Abgleichschaltkreis (122) umfasst, ein Einspeiseknoten (123) um die zweite Antennenstruktur herum angeordnet ist, die zweite Antennenstruktur elektrisch mit einem ersten Anschluss des ersten Abgleichschaltkreises (122) über den Einspeiseknoten gekoppelt ist, ein zweiter Anschluss des ersten Abgleichschaltkreises mit dem Funkfrequenzmodul gekoppelt ist;
die zweite passive Einheit eine dritte Antennenstruktur (131) und einen zweiten Abgleichschaltkreis (132) umfasst, ein zweiter Erdungsknoten (133) auf der dritten Antennenstruktur angeordnet ist, die dritte Antennenstruktur elektrisch mit einem ersten Anschluss des zweiten Abgleichschaltkreises (132) über den zweiten Erdungsknoten (133) gekoppelt ist, ein zweiter Anschluss des zweiten Abgleichschaltkreises zum Koppeln mit Masse konfiguriert ist,
wobei sich der Einspeiseknoten (123) zwischen dem ersten Erdungsknoten (113) und dem zweiten Erdungsknoten (133) befindet;
ein erster Unterbrechungsspalt (101) und ein zweiter Unterbrechungsspalt (102) auf einer selben Seite des Metallrahmens (100) ausgebildet sind, die erste Antennenstruktur (111), die zweite Antennenstruktur (121) und die dritte Antennenstruktur (131) um den ersten Unterbrechungsspalt (101) herum angeordnet sind und die erste Antennenstruktur und die zweite Antennenstruktur (121) elektrisch mit einem Teil des Metallrahmens (100) zwischen dem ersten Unterbrechungsspalt bzw. dem zweiten Unterbrechungsspalt gekoppelt sind,
wobei die zweite Antennenstruktur (121) einen Verbindungsabschnitt (121a), einen Einspeiseabschnitt (121b), einen ersten parasitären Zweig (121c) und einen zweiten parasitären Zweig (121d) umfasst,
Teile des Metallrahmens auf zwei Seiten des ersten Unterbrechungsspalts elektrisch durch den Verbindungsabschnitt gekoppelt sind und der Einspeiseknoten auf dem Einspeiseabschnitt angeordnet ist,
der erste parasitäre Zweig (121c) vom Verbindungsabschnitt in einer ersten Richtung (201) verläuft,
der zweite parasitäre Zweig (121d) vom Einspeiseabschnitt in einer zweiten Richtung (202) verläuft,
der erste parasitäre Zweig elektrisch mit dem Einspeiseabschnitt gekoppelt ist, in dem die erste Richtung eine Richtung vom ersten Unterbrechungsspalt (101) zum zweiten Unterbrechungsspalt (102) ist und die zweite Richtung eine Richtung lotrecht zur ersten Richtung ist, die auf den Metallrahmen zeigt.

2. Kommunikationsantenne nach Anspruch 1, wobei die Regulierbaugruppe einen Widerstand, einen Kondensator und einen Induktor umfasst.

3. Kommunikationsantenne nach Anspruch 1, wobei die Regulierbaugruppe einen Leiter mit einem Widerstandswert von 0 Ω, einen Kondensator und einen Induktor umfasst.

4. Kommunikationsantenne nach Anspruch 2 oder Anspruch 3, wobei
ein Kapazitätswert des Kondensators im Bereich von 0,5 pF bis 15 pF liegt; und
ein Induktanzwert des Induktors im Bereich von 1 nH bis 22 nH liegt.

5. Verfahren zum Steuern einer Kommunikationsantenne nach einem der Ansprüche 1 bis 4, das Folgendes beinhaltet:
Bestimmen eines ersten Frequenzbereichs, in dem eine aktuelle Kommunikationsfrequenz liegt; und
Auswählen einer ersten elektronischen Komponente entsprechend dem ersten Frequenzbereich von der Regulierbaugruppe der ersten passiven Einheit der Kommunikationsantenne und Verbinden der ersten elektronischen Komponente mit dem Schaltkreis, so dass die Kommunikationsantenne im ersten Frequenzbereich resoniert.

6. Verfahren nach Anspruch 5, wobei das Auswählen einer ersten elektronischen Komponente entsprechend dem ersten Frequenzbereich von der Regulierbaugruppe der ersten passiven Einheit der Kommunikationsantenne und das Verbinden der ersten elektronischen Komponente mit dem Schaltkreis Folgendes beinhaltet:
Erfassen von Korrespondenzinformationen von Frequenzbereichen und elektronischen Komponenten von vorgespeicherten Daten;
Suchen nach der ersten elektronischen Komponente entsprechend dem ersten Frequenzbereich in den Korrespondenzinformationen; und
Verbinden der ersten elektronischen Komponente mit dem Schaltkreis über den Schalter.

7. Vorrichtung, konfiguriert zum Steuern einer Kommunikationsantenne nach einem der Ansprüche 1 bis 4, die Folgendes umfasst:
ein Bestimmungsmodul (401), konfiguriert zum Bestimmen eines ersten Frequenzbereichs, in dem eine aktuelle Kommunikationsfrequenz liegt; und
ein Schaltmodul (402), konfiguriert zum Auswählen einer ersten elektronischen Komponente entsprechend dem ersten Frequenzbereich aus der Regulierbaugruppe der ersten passiven Einheit der Kommunikationsantenne und zum Verbinden der ersten elektronischen Komponente mit dem Schaltkreis, so dass die Kommunikationsantenne im ersten Frequenzbereich resoniert.

8. Vorrichtung nach Anspruch 7, wobei das Schaltmodul Folgendes umfasst:
ein Erfassungssubmodul (501), konfiguriert zum Erfassen von Korrespondenzinformationen von Frequenzbereichen und elektronischen Komponenten von vorgespeicherten Daten;
ein Suchsubmodul (502), konfiguriert zum Suchen nach der ersten elektronischen Komponente entsprechend dem ersten Frequenzbereich in den Korrespondenzinformationen; und
ein Verbindungssubmodul (503), konfiguriert zum Verbinden der ersten elektronischen Komponente mit dem Schaltkreis über den Schalter.

9. Endgerät, das Folgendes umfasst:
einen Prozessor;
eine Antenne nach einem der Ansprüche 1-4,
eine Vorrichtung nach Anspruch 7 oder 8, und
einen Speicher, konfiguriert zum Speichern eines Befehls, der von dem Prozessor ausgeführt werden kann, um zu bewirken, dass er die Schritte von Anspruch 5 oder 6 durchführt.

10. Computerprogrammprodukt, auf dem Befehle gespeichert sind, die bei Ausführung durch einen oder mehrere Prozessoren einer Vorrichtung bewirken, dass die Vorrichtung die Schritte nach Anspruch 5 oder 6 durchführt.

## Revendications

1. Antenne de communication pour terminal mobile dotée d'un cadre métallique (100), l'antenne comprenant le cadre métallique (100), une première unité passive (110), une unité de réception de stimulation (120) et une seconde unité passive (130),
dans laquelle la première unité passive (110) et la seconde unité passive sont configurées pour être respectivement couplées à la masse, l'unité de réception de stimulation est configurée pour être couplée électriquement à un module de fréquence radioélectrique du terminal mobile de manière à recevoir un signal électrique transmis par le module de fréquence radioélectrique ;
la première unité passive comprend un circuit de régulation (112), le circuit de régulation comprend un commutateur (112a), un contrôleur (112b) et un ensemble de régulation (112c), l'ensemble de régulation comprend une pluralité de composants électroniques, et le contrôleur est configuré pour commander le commutateur afin de connecter différents composants électroniques de l'ensemble de régulation au circuit, de manière à amener l'antenne de communication à résonner dans différentes plages de fréquences,
dans laquelle la première unité passive comprend en outre un premier diagramme de rayonnement d'antenne (111), un premier noeud de mise à la masse (113) est disposé sur le premier diagramme de rayonnement d'antenne, le premier diagramme de rayonnement d'antenne est couplé électriquement à une première borne du circuit de régulation par l'intermédiaire du premier noeud de mise à la masse (113), une deuxième borne du circuit de régulation est configurée pour être couplée à la masse ;
l'unité de réception de stimulation comprend un deuxième diagramme de rayonnement d'antenne (121) et un premier circuit d'adaptation (122), un noeud d'alimentation (123) est disposé sur le deuxième diagramme de rayonnement d'antenne, le deuxième diagramme de rayonnement d'antenne est couplé électriquement à une première borne du premier circuit d'adaptation (122) par l'intermédiaire du noeud d'alimentation, une deuxième borne du premier circuit d'adaptation est couplée au module de fréquence radioélectrique ;
la seconde unité passive comprend un troisième diagramme de rayonnement d'antenne (131) et un second circuit d'adaptation (132), un second noeud de mise à la masse (133) est disposé sur le troisième diagramme de rayonnement d'antenne, le troisième diagramme de rayonnement d'antenne est couplé électriquement à une première borne du second circuit d'adaptation (132) par l'intermédiaire du second noeud de mise à la masse (133), une deuxième borne du second circuit d'adaptation est configurée pour être couplée à la masse,
dans laquelle le noeud d'alimentation (123) est disposé entre le premier noeud de mise à la masse (113) et le second noeud de mise à la masse (133) ;
un premier espace de rupture (101) et un second espace de rupture (102) sont formés sur un même côté du cadre métallique (100), le premier diagramme de rayonnement d'antenne (111), le deuxième diagramme de rayonnement d'antenne (121) et le troisième diagramme de rayonnement d'antenne (131) sont disposés autour du premier espace de rupture (101), et le premier diagramme de rayonnement d'antenne et le deuxième diagramme de rayonnement d'antenne (121) sont couplés électriquement à une partie du cadre métallique (100) entre le premier espace de rupture et le second espace de rupture respectivement,
dans laquelle le deuxième diagramme de rayonnement d'antenne (121) comprend une partie de connexion (121a), une partie d' alimentation (121b), une première branche parasite (121c) et une seconde branche parasite (121d), des parties du cadre métallique sur deux côtés du premier espace de rupture sont couplées électriquement par la partie de connexion, et le noeud d'alimentation est disposé sur la partie d'alimentation,
la première branche parasite (121c) s'étend depuis la partie de connexion dans un premier sens (201),
la seconde branche parasite (121d) s'étend depuis la partie d' alimentation dans un second sens (202),
la première branche parasite est couplée électriquement à la partie d'alimentation, dans laquelle le premier sens est un sens depuis le premier espace de rupture (101) vers le second espace de rupture (102), et le second sens est un sens perpendiculaire au premier sens et pointant vers le cadre métallique.

2. Antenne de communication selon la revendication 1, dans laquelle l'ensemble de régulation comprend une résistance, un condensateur et une bobine d'induction.

3. Antenne de communication selon la revendication 1, dans laquelle l'ensemble de régulation comprend un conducteur d'une valeur de résistance de 0 Ω, un condensateur et une bobine d'induction.

4. Antenne de communication selon la revendication 2 ou la revendication 3, dans laquelle
une valeur de capacité du condensateur est comprise dans une plage de 0,5 pF à 15 pF ; et
une valeur d'inductance de la bobine d'induction est comprise dans une plage de 1 nH à 22 nH.

5. Procédé de commande d'une antenne de communication selon l'une quelconque des revendications 1 à 4, comprenant :
la détermination d'une première plage de fréquences dans laquelle est située une fréquence de communication actuelle ; et
la sélection d'un premier composant électronique correspondant à la première plage de fréquences à partir de l'ensemble de régulation de la première unité passive de l'antenne de communication et la connexion du premier composant électronique au circuit, de telle sorte que l'antenne de communication résonne dans la première plage de fréquences.

6. Procédé selon la revendication 5, dans lequel la sélection d'un premier composant électronique correspondant à la première plage de fréquences à partir de l'ensemble de régulation de la première unité passive de l'antenne de communication et la connexion du premier composant électronique au circuit comprennent :
l'acquisition d'informations de correspondance de plages de fréquences et de composants électroniques à partir de données prémémorisées ;
la recherche du premier composant électronique correspondant à la première plage de fréquences dans les informations de correspondance ; et
la connexion du premier composant électronique au circuit par l'intermédiaire du commutateur.

7. Appareil configuré pour commander une antenne de communication selon l'une quelconque des revendications là 4, comprenant :
un module de détermination (401), configuré pour déterminer une première plage de fréquences dans laquelle est située une fréquence de communication actuelle ; et
un module de commutation (402), configuré pour sélectionner un premier composant électronique correspondant à la première plage de fréquences à partir de l'ensemble de régulation de la première unité passive de l'antenne de communication et connecter le premier composant électronique au circuit, de telle sorte que l'antenne de communication résonne dans la première plage de fréquences.

8. Appareil selon la revendication 7, dans lequel le module de commutation comprend :
un sous-module d'acquisition (501), configuré pour acquérir des informations de correspondance de plages de fréquences et de composants électroniques à partir de données mémorisées ;
un sous-module de recherche (502), configuré pour rechercher le premier composant électronique correspondant à la première plage de fréquences dans les informations de correspondance ; et
un sous-module de connexion (503), configuré pour connecter le premier composant électronique au circuit par l'intermédiaire du commutateur.

9. Terminal, comprenant :
un processeur ;
une antenne selon l'une quelconque des revendications 1 à 4,
un appareil selon la revendication 7 ou 8, et
une mémoire configurée pour mémoriser une instruction exécutable pour le processeur afin de l'amener à exécuter les étapes des revendications 5 ou 6.

10. Produit-programme sur lequel sont mémorisées des instructions qui, à leur exécution par un ou plusieurs processeurs d'un appareil, amène l'appareil à réaliser les étapes de la revendication 5 ou 6.
